(19) Europäisches Patentamt
European Patent Office
Office européen des brevets

(11) **EP 4 086 371 A1**

(12) **EUROPEAN PATENT APPLICATION**

(43) Date of publication:
**09.11.2022  Bulletin 2022/45**

(51) International Patent Classification (IPC):
$C25B\ 1/04$ *(2021.01)* $\quad$ $C25B\ 11/052$ *(2021.01)*
$C25B\ 11/065$ *(2021.01)* $\quad$ $C25B\ 11/077$ *(2021.01)*
$C04B\ 35/553$ *(2006.01)* $\quad$ $C04B\ 35/626$ *(2006.01)*
$H01M\ 4/86$ *(2006.01)* $\quad$ $H01M\ 4/90$ *(2006.01)*
$H01M\ 8/083$ *(2016.01)* $\quad$ $H01M\ 8/086$ *(2016.01)*
$B01J\ 27/12$ *(2006.01)* $\quad$ $B01J\ 35/00$ *(2006.01)*
$H01M\ 8/1018$ *(2016.01)*

(21) Application number: **21305587.4**

(22) Date of filing: **06.05.2021**

(52) Cooperative Patent Classification (CPC):
**C25B 1/04; B01J 27/12; B01J 35/0033;
C04B 35/553; C04B 35/62675; C25B 11/052;
C25B 11/065; C25B 11/0775; H01M 4/8605;
H01M 4/9016; H01M 4/9075; H01M 8/083;
H01M 8/086;** C04B 2235/3272; C04B 2235/3275;

*(Cont.)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
- **Université du Mans
  72085 Le Mans Cedex 09 (FR)**
- **Université de Montréal
  Montreal, QC H3T 1J4 (CA)**

(72) Inventors:
- **LHOSTE, Jérôme
  72100 LE MANS (FR)**

- **KORNIENKO, Nikolay
  MONTRÉAL, H2L 4A7 (CA)**
- **GOHARIBAJESTANI, Zahra
  LONDON, W8 4EF (GB)**
- **MAISONNEUVE, Vincent
  72380 SOUILLÉ (FR)**
- **GUIET, Amandine
  72000 LE MANS (FR)**
- **RIBAUD, Annie
  72230 MONCÉ-EN-BELIN (FR)**
- **MOURY, Romain
  72100 LE MANS (FR)**
- **GALVEN, Cyrille
  72000 LE MANS (FR)**

(74) Representative: **Lavoix
2, place d'Estienne d'Orves
75441 Paris Cedex 09 (FR)**

(54) **NOVEL OXYFLUORIDES, ELECTRODES CONTAINING THEM AND THEIR USE FOR HYDROGEN PRODUCTION**

(57)     The present invention concerns novel oxyfluoride derivatives and their preparation, as well as their uses as catalysts in electrochemistry, including the electrodes and electrochemical cells comprising them. These may be useful for hydrogen production.

**EP 4 086 371 A1**

**(Cont. next page)**

(52) Cooperative Patent Classification (CPC): (Cont.)
C04B 2235/3279; C04B 2235/3284;
H01M 2008/1095; Y02E 60/36

**Description**

The present invention concerns the electrochemical production of hydrogen.

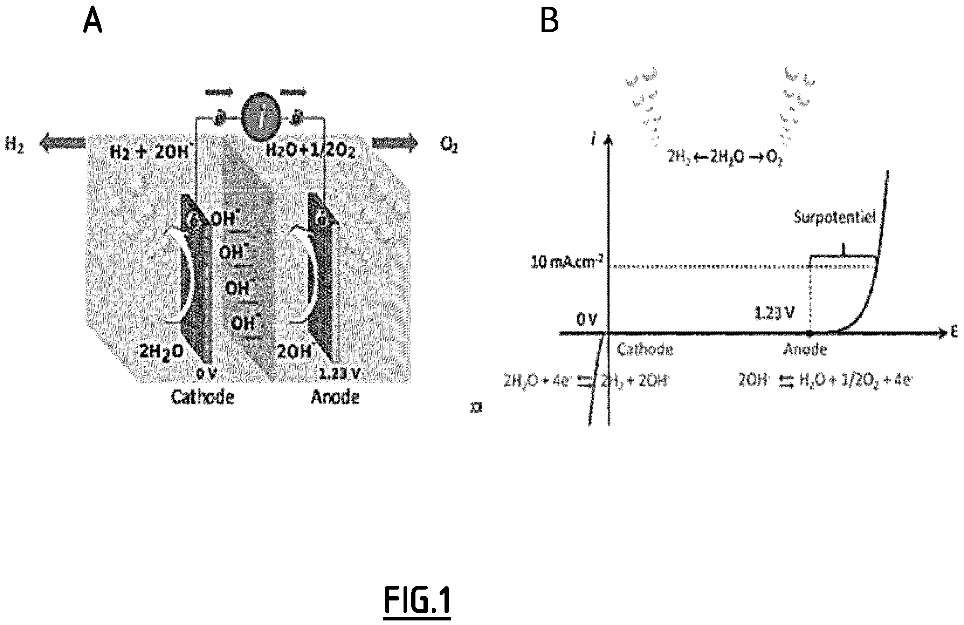

Global warming, ocean acidification, extreme weather events, and low air quality require an urgent energy transition towards renewable energies (wind, solar, thermal, etc.). However, their intermittent nature implies their storage. Hydrogen in tandem with a fuel cell (FC) appears among the most promising solution for energy storage and recovery, and some are already on the market. Although hydrogen is the most abundant gas in the universe, it is found on earth almost only in combined form ($CH_4$, $H_2O$...). Steam methane reforming in which $CO_2$ is emitted is currently the main industrial process for hydrogen manufacturing (> 95%). If $CO_2$ is not sequestered, this hydrogen is called gray hydrogen, if captured upstream, it is then qualified as blue hydrogen. In the long term, its production must tend towards greenhouse gas-free process to give decarbonized hydrogen called green hydrogen. The electrolysis of water falls under this last appellation and represents, in a vision of sustainable development, the most attractive solution. However, the industrial development of electrolyzers is hampered by their low energy efficiency, related to the need of a significant overpotential to the anode as illustrated in Figure 1. Consequently, the cost of producing green hydrogen is four times higher than that of gray hydrogen.

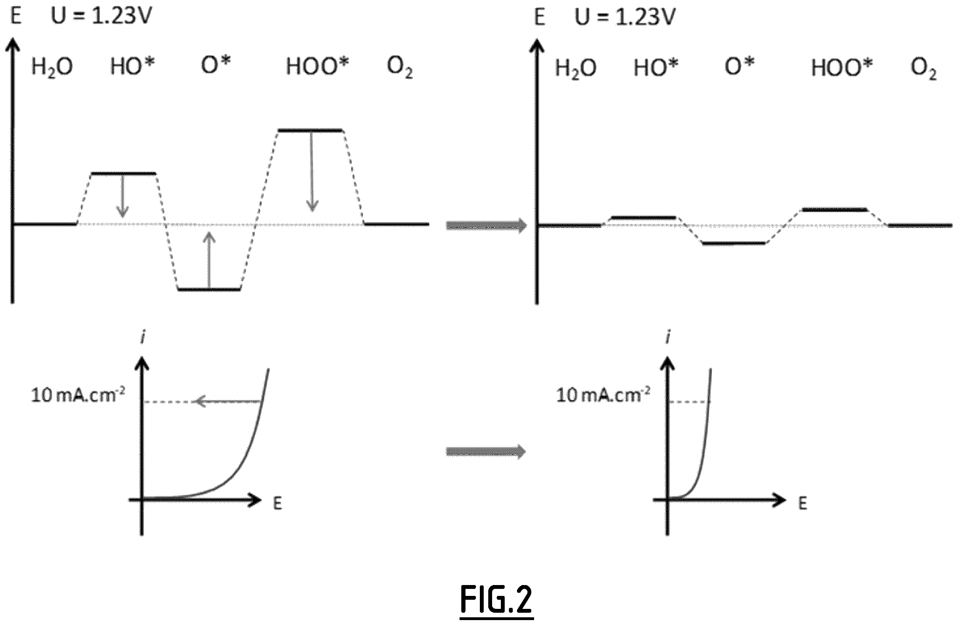

According to the mechanisms proposed in the literature for the Oxygen Evolution Reaction (OER) reaction, the overpotential originates from the energy barriers of four intermediate reaction steps (Table 1). The addition of a catalyst lowers these barriers and thus the overpotential (Figure 2). To date, the benchmark catalysts are iridium and ruthenium oxides, whether in acidic or basic medium. However, their prohibitive cost makes any industrial application difficult.

As an alternative to these benchmark oxides, new catalysts based on 3d elements have recently been proposed: $ABO_3$ perovskites, $AB_2O_4$ spinels and layer structures of mono- or multimetallic oxyhydroxides MOOH (Xu et al Chem. Soc. Rev 2017, 46, 337. https://doi.org/10.1039/c6cs00328a). This latter family provides currently the best alternative, in alkaline medium, to precious metal oxides but not industrialized.

Despite the aforementioned progress, there is still a need to continually push the performance of earth-abundant water oxidation catalysts.

According to a first object, the present invention thus concerns a compound of formula (I):

$$(M1^{2+}_xM2^{3+}_{1-x})_{1-u-v}(M1'^{2+}_yM2'^{3+}_{1-y})_u(M1''^{2+}_zM2''^{3+}_{1-z})_vO_{1-w}F_{1+w} \qquad (I)$$

Wherein

M1, M2, M1', M2', M1", M2" are transition metals of the *d/f* block or alkaline-earth elements in the periodic table;

u, v, x, y and z are identical or different and are such that:

$$u+v < 1;$$
$$0 < x,y,z < 1;$$

$$W = X+U(Y-X)+V(Z-X).$$

As used herein, the transition metals of the *d/f* block include the following elements:

3d : Sc, Ti, V, Cr, Mn, Fe, Co, Ni, Cu;
4d: Y, Zr, Nb, Mo, Tc, Ru, Rh, Pd, Ag;
5d: Lu, Hf, Ta, W, Re, Os, Ir, Pt, Au, Hg;
6d: Lr, Rf, Db, Sg, Bh, Hs, Mt, Ds, Rg, Cn; and
the lanthanides and actinides of the f block, which include La, Ce, Pr, Nd, Pm, Sm, Eu, Gd, Tb, Dy, Ho, Er, Tm, Yb, Ac, Th, Pa, U, Np, Pu, Am, Cm, Bk, Cf, Es, Fm, Md, No.

**[0008]** Alkaline-earth elements refer to Be, Mg, Ca, Sr, Ba, Ra.

According to an embodiment, M1, M1' and M1" belong to *d/f* block or alkaline-earth elements in the periodic table and M2, M2' and M2" belong to *d/f* block of the periodic table.

In particular, M1 and M1', M1" are chosen from Mn, Fe, Co, Ni, Cu, Zn and M2 and, M2', M2" are chosen from Mn, Fe, Co, Ni, Ru, Rh.

According to an embodiment, either x = 0.5 and y = z = u = v = 0 or
x = y = 0.5 and u = 0.5 and z = v = 0 with M2 = M2' or
x = 0.3 and y = 0.7 and u=0.5 and z = v = 0 with M2 = M2'.

According to a particular embodiment, the compound of formula (I) is chosen from the following compounds:

$M^{2+}_{0.5}Fe^{3+}_{0.5}O_{0.5}F_{1.5}$ with M = Co, Ni, Zn

$Co^{2+}_{0.5}Fe^{3+}_{0.5}O_{0.5}F_{1.5}$

$Ni^{2+}_{0.5}Fe^{3+}_{0.5}O_{0.5}F_{1.5}$,

$Zn^{2+}_{0.5}Fe^{3+}_{0.5}O_{0.5}F_{1.5}$ as well as,

$Co^{2+}_{0.25}Ni^{2+}_{0.25}Fe^{3+}_{0.5}O_{0.5}F_{1..5}$, and

$Co^{2+}_{0.15}Fe^{2+}_{0.35}Fe^{3+}_{0.5}O_{0.5}F_{1.5}$.

According to a further object, the present invention concerns a solid solution of the compound of formula (I) as defined above.

The term "solid solution" as used herein refers to a unique phase component made of the compound of formula (I) as defined above.

According to a still further object, the present invention concerns an electrode comprising the compound of the invention, as a catalyst.

As a catalyst, the compounds of formula (I) lower the kinetics barrier of the intermediates reactions involved in water electrolysis. Some illustrative reactions are set out in Table 1 below:

***Table 1.*** *Intermediates reactions during OER in acidic or basic media.*

| Acid catalyst | Alkaline catalyst | |
|---|---|---|
| $H_2O + * \rightarrow HO^* + H^+ + e^-$ | 1A) $OH^- + * \rightarrow HO^* + e^-$ | 1B) |
| $HO^* \rightarrow O^* + H^+ + e^-$ | 2A) $HO^* + OH^- \rightarrow O^* + H_2O + e^-$ | 2B) |
| $H_2O + O^* \rightarrow HOO^* + H^+ + e^-$ | 3A) $O^* + OH^- \rightarrow HOO^* + e^-$ | 3B) |
| $HOO^* \rightarrow * + O_2 + H^+ + e^-$ | 4A) $HOO^* + OH^- \rightarrow * + O_2 + H_2O + e^-$ | 4B) |
| The symbol * means the active site of the catalyst. | | |

According to an embodiment, said electrode may be a working, a positive or a negative electrode.

Typically, the electrode comprises a support loaded with said catalyst.

Said support is generally chosen from stable, inert high-surface area substrates which are able to load the catalyst.

The loading may be achieved in particular by impregnating the support with an ink comprising the catalyst compound (I). Typically, the support may be soaked in the ink or spread with the ink.

Said ink may be a mixture of the catalyst compound (I) in an aqueous solution, optionally comprising a water soluble solvent (such as ethanol). Said ink may also comprise one or more binders, such as Nafion and multiwalled carbon nanotubes. The CNT helps electrically connect the catalyst and the Nafion helps with adhesion to the substrate.

Said support may be chosen in particular from carbon paper (such as Toray carbon paper), Ni foam, transparent conductive oxides (TCO) such as fluorinated tin oxide (Fluorine doped tin oxide, FTO), indium tin oxide (ITO) and antimony doped tin oxide (ATO).

The catalyst loaded support located on one side of the electrode contacts with the electrolyte whereas the other side of the electrode is connected with a current collector.

According to another object, the present invention also concerns a process of preparation of the solid solution of the invention. Said process comprises the following steps:

- The synthesis of a hydrated fluorinated precursor of formula (II):

$$(M1^{2+}_xM2^{3+}_{1-x})_{1-u-v}(M1'^{2+}_yM2'^{3+}_{1-y})_u(M1''^{2+}_zM2''^{3+}_{1-z})_vF_5(H_2O)_7 \qquad (II)$$

Where x, y, z, u, v, M1, M2, M1', M2', M1" and M2" are defined as above,
By evaporation of a concentrated hydrofluoric acid (HF) solution of the dissolved metal salts or by precipitation of said solution; and
- The thermal treatment of the compound of formula (II) at a temperature comprised between 150 and 400°C.

The concentrated hydrofluoric acid (HF) solution is a solution of hydrogen fluoride in water, in a concentration comprised between 20 and 40 mol.L$^{-1}$, typically 28 mol.L$^{-1}$ (HF$_{48\%}$).

The solution of dissolved metal salts refers to the concentrated hydrofluoric acid solution wherein salts of M1, M2, M1', M2', M1", M2" as well as their counter-ions are dissolved. Counter-ions may include anions such as chloride, nitrate, carbonate, phosphate, sulfate, acetate, carbonate, etc.... Such solution of dissolved metal salts can be achieved by dissolving under stirring salts of M1, M2, M1', M2', M1", M2"with their respective counter ions, or solvates therefrom in the concentrated hydrofluoric acid solution, in respective concentrations corresponding to the respective ratio of M1, M2, M1', M2', M1", M2" in formula (II).

The evaporation may be conducted by stirring the solution under heating (generally in an oil bath) at a temperature below or equal to the boiling temperature of the solution, typically at about 100°C for a duration sufficient to achieve a precipitate.

Alternatively, the precipitate may be obtained by the precipitation of the solution of concentrated hydrofluoric acid (HF) of the dissolved metal salts, by addition of alcohol, typically ethanol. Said precipitation may be handled at room temperature.

According to both alternatives, the precipitate is then separated e.g. by filtration. Said precipitate is constituted by the hydrated fluorinated compound (II).

The step of thermal treatment may be carried out in a furnace at a temperature comprised between 150 and 400°C, generally under ambient atmosphere, in a duration sufficient to achieve the weight loss corresponding of the loss of the six water and two HF molecules comprised in the hydrated fluorinated precursor of formula (II).

The compounds of formula (II) are novel and are another object of the invention:

$$(M1^{2+}{}_xM2^{3+}{}_{1-x})_{1-u-v}(M1'^{2+}{}_yM2'^{3+}{}_{1-y})_u(M1''^{2+}{}_zM2''^{3+}{}_{1-z})_vF_5(H_2O)_7 \qquad (II)$$

Where x, y, z, u, v, M1, M2, M1', M2', M1" and M2" are defined as above.

According to another object, the invention also concerns an electrochemical cell comprising at least one electrode of the invention.

Typically, said electrochemical cell may be a water electrolyzer and/or a fuel cell.

In the case of electrolysis, the electrode of the invention is typically a working electrode (i.e.) the electrode on which the reaction of interest (water electrolysis) occurs.

The working electrode is typically used in three electrode system, in conjunction with an auxiliary electrode (Pt or carbon counter electrode) and a reference electrode (such as Hg/HgO reference electrode).

The electrolyte may generally be chosen from strong acids such as sulfuric acid and strong bases such as potassium hydroxide and sodium hydroxide, due to their strong conducting abilities. A solid polymer electrolyte such as Nafion can also be used.

Fuel cells are made up of an anode and a cathode separated by an electrolyte.

The electrolyte can be chosen from potassium hydroxide, salt carbonates, and phosphoric acid or can be a polymer membrane in particular.

According to another object, the present invention also concerns a process of preparation of hydrogen comprising the electrolysis of water with an electrochemical cell of the invention.

Water electrolysis (also called water splitting) refers to the process of using electricity to decompose water into oxygen and hydrogen gas, requiring a minimum potential difference of 1.23 volts.

Hydrogen gas formed in this way can be used as hydrogen fuel in a fuel cell combined with said water electrolyzer. In the fuel cell, hydrogen is consumed, water is created, and an electric current is generated, which can be used to power electrical devices.

The following reactions are involved (Table 2):

| Electrolyte | Water electrolysis | Fuel cell |
|---|---|---|
| Acidic solution | Cathode: $2H^+ + 2e^- \rightarrow H_2$ (0 V)<br>Anode: $H_2O \rightarrow 2H^+ + \frac{1}{2}O_2 + 2e^-$ (1.23 V) | Cathode: $H_2 \rightarrow 2H^+ + 2e^-$ (0 V)<br>Anode: $2H^+ + \frac{1}{2}O_2 + 2e^- \rightarrow H_2O$ (1.23 V) |
| Alkaline solution | Cathode: $2H_2O + 2e^- \rightarrow H_2 + 2OH^-$ (0 V)<br>Anode: $2OH^- \rightarrow H_2O + \frac{1}{2}O_2 + 2e^-$ (1.23 V) | Cathode: $H_2 + 2OH^- \rightarrow 2H_2O + 2e^-$ (0 V)<br>Anode: $H_2O + \frac{1}{2}O_2 + 2e^- \rightarrow 2OH^-$ (1.23 V) |

Figures:

Figure 1 is a schematic representation of an electrolyzer (A) and representation of overpotential applied to the anode at 10 mA.cm$^{-2}$ (B).

Figure 2 is a representation of modulating the energy levels of the binding strength between the active sites and the intermediates and its impact on the overpotential.

Figure 3 represents the cyclic voltammetry measurement of $CO^{2+}_{0.5}Fe^{3+}_{0.5}O_{0.5}F_{1.5}$ showing the current density as a function of the potential applied.

Figure 4 illustrates the Tafel slope of $CO^{2+}_{0.5}Fe^{3+}_{0.5}O_{0.5}F_{1.5}$ on Glassy Carbon and Carbon Paper substrate indicating that for every increase of 27 mV of applied potential, the current density increases by one order of magnitude.

Figure 5 shows the evolution of the mass activity (left) and TOF (right) as a function of the applied potential for $Co^{2+}_{0.5}Fe^{3+}_{0.5}O_{0.5}F_{1.5}$.

Figure 6 represents the Arrhenius plot for $CO^{2+}_{0.5}Fe^{3+}_{0.5}O_{0.5}F_{1.5}$ to determine the activation energy of the rate limiting step.

Figure 7 illustrates the chronopotentiometric measurement of $CO^{2+}_{0.5}Fe^{3+}_{0.5}O_{0.5}F_{1.5}$ over extended periods of time shows no obvious activity decrease.

Figure 8 represents the XRD patterns of $Co^{2+}Fe^{3+}F_5(H_2O)_7$, $Ni^{2+}Fe^{3+}F_5(H_2O)_7$ and $Co^{2+}_{0.5}Ni^{2+}_{0.5}Fe^{3+}F_5(H_2O)_7$ matching with the PDF card number 00-037-0794 ($CoFeF_5(H_2O)_7$).

Figure 9 represents the EDX spectra of $Co^{2+}Fe^{3+}F_5(H_2O)_7$ and $Ni^{2+}Fe^{3+}F_5(H_2O)_7$, ratios of metal cations $M'^{3+}/M^{2+}$ are close to one.

Figure 10 represents the TXRD of $Co^{2+}Fe^{3+}F_5(H_2O)_7$ under ambient atmosphere showing the formation of the intermediate phase $CO^{2+}_{0.5}Fe^{3+}_{0.5}O_{0.5}F_{1.5}$ with rutile structure type (characteristic peaks surrounded in the black circles).

Figure 11 represents the thermogravimetric curve of $Co^{2+}Fe^{3+}F_5(H_2O)_7$ under ambient air.

Figure 12 represents the XRD patterns of $CO^{2+}_{0.5}Fe^{3+}_{0.5}O_{0.5}F_{1.5}$ and $Ni^{2+}_{0.5}Fe^{3+}_{0.5}O_{0.5}F_{1.5}$ obtained by thermal treatment of $Co^{2+}Fe^{3+}F_5(H_2O)_7$ and $Ni^{2+}Fe^{3+}F_5(H_2O)_7$, respectively.

Figure 13 illustrates the comparison of FTIR spectra of $CO^{2+}_{0.5}Fe^{3+}_{0.5}O_{0.5}F_{1.5}$ and $Ni^{2+}_{0.5}Fe^{3+}_{0.5}O_{0.5}F_{1.5}$ with those of their corresponding hydrated precursors, $Co^{2+}Fe^{3+}F_5(H_2O)_7$ and $Ni^{2+}Fe^{3+}F_5(H_2O)_7$.

Figure 14 represents the $N_2$ adsorption-desorption isotherms of $CO^{2+}_{0.5}Fe^{3+}_{0.5}O_{0.5}F_{1.5}$ and $Ni^{2+}_{0.5}Fe^{3+}_{0.5}O_{0.5}F_{1.5}$ and corresponding BJH pore size distributions.

Figure 15 represents the TEM pictures showing the mesoporosity of $CO^{2+}_{0.5}Fe^{3+}_{0.5}O_{0.5}F_{1.5}$ and $Ni^{2+}_{0.5}Fe^{3+}_{0.5}O_{0.5}F_{1.5}$.

Examples

**Example 1: Electrocatalytic properties of solid solutions $M^{2+}_xM^{3+}_{1-x}O_{1-x}F_{1+x}$**

Electrocatalytic measurements are performed in a standard 3-electrode setup in a custom-built glass single compartment reaction cell. Hg/HgO reference and Pt or carbon counter electrodes are used for all measurements. For a working electrode substrate, Toray Carbon Paper is used as a model high-surface area support (catalyst loading of 5 mg.cm$^{-2}$). Alternatively, a rotating disk setup with a glassy carbon surface is used (catalyst loading of 0.1 mg.cm$^{-2}$). To generate a catalyst-coated working electrode, a catalyst ink is generated by sonicating 300 $\mu$l ethanol, 100 $\mu$l de-ionized water, 10 $\mu$l of 5% Nation™ solution, 4 mg catalyst and 0.2 mg multiwalled carbon nanotubes (10-40 nm diameter). The ink is spread onto a working electrode surface and allowed to dry under ambient conditions. 1.0 M KOH is used as the electrolyte in all measurements at room temperature (approximately 21°C) and 95% compensation of the solution resistance is used correct correction. The solution resistance is measured at open circuit at 100 KHz frequency before each measurement. Turnover frequencies (TOFs) are calculated by dividing the reaction rate (extracted from the current density, assuming 4 electrons extracted from each water molecule) by the redox-active cobalt species, calculated through integrating the area under the Co(II/III) redox peak at 0.1 V vs. RHE (Reversible Hydrogen Electrode).

**Example of $Co^{2+}_{0.5}Fe^{3+}_{0.5}O_{0.5}F_{1.5}$**

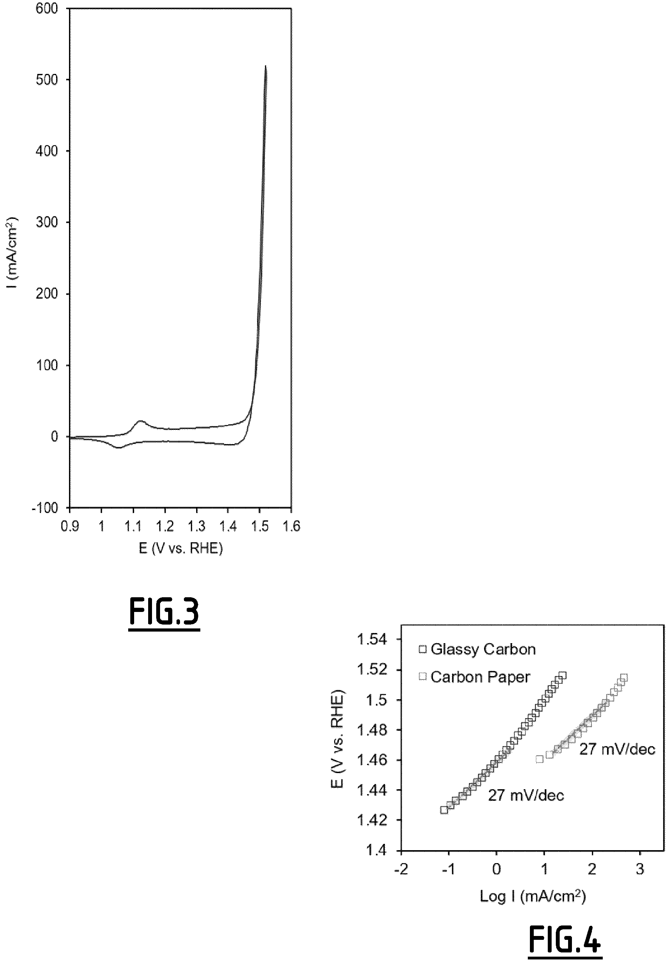

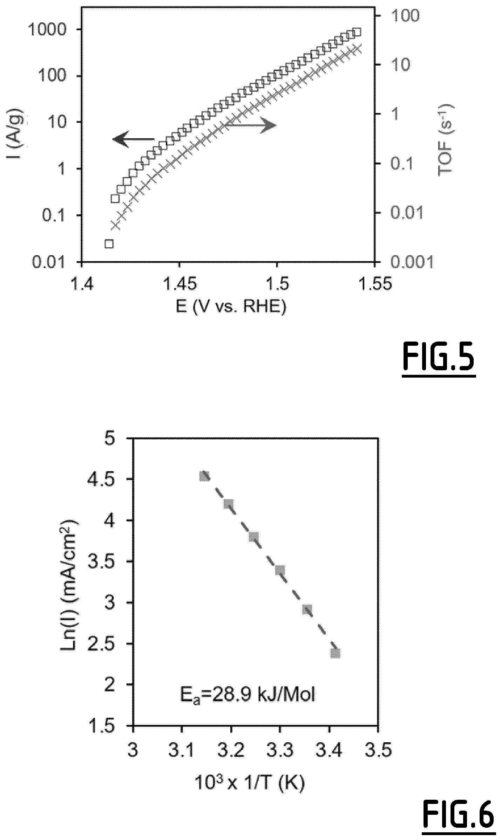

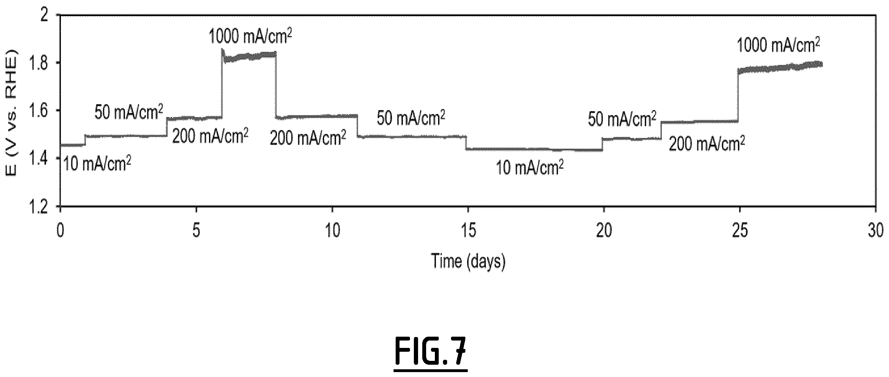

The $Co^{2+}_{0.5}Fe^{3+}_{0.5}O_{0.5}F_{1.5}$ catalyst-loaded carbon paper electrode exhibits 220 mV overpotential for a current density of 10 mA.cm$^{-2}$ (Figure 3). The Tafel slope, measured in a current density range of 1-100 mA.cm$^{-2}$, is calculated to be 27 mV.decade$^{-1}$ (Figure 4). At 300 mV overpotential, the mass activity of $Co^{2+}_{0.5}Fe^{3+}_{0.5}O_{0.5}F_{1.5}$ reaches 846 A.g$^{-1}$, with a TOF of 21 s$^{-1}$ per electroactive site (or 0.5 s$^{-1}$ using the total mass of cobalt deposited) (Figure 5). The high activity is also evident through the low activation energy of 28.9 kJ.mol$^{-1}$, calculated from the Arrhenius plot (Figure 6). The activity is stable for more than 500 h, as measured through chronopotentiometric tests at current densities of 10, 50, 200 and 1000 mA.cm$^{-2}$ (Figure 7).

Overall, the electrocatalytic performance of $Co^{2+}_{0.5}Fe^{3+}_{0.5}O_{0.5}F_{1.5}$ is arguably the best reported for a cobalt-based material under the above-mentioned standard testing conditions in terms of a combination of overpotential, mass activity, turnover frequency and stability. This conclusion is attained after a careful comparison of quantitative performance metrics of notable catalysts reported over the last several years (Table 3).

Table 3 gathers their electrochemical properties in comparison with precious metals oxides and with the best reported oxohydroxides. It should be noted that in order to properly compare catalytic performances of anodic materials, it is necessary to take into account several electrochemical characteristics as well as the measuring conditions:

- overpotential (mV),
- Tafel slope (mV.dec$^{-1}$): the lower it is, the lower the increase in potential to be applied to obtain a high current density and therefore a high hydrogen production rate,
- turnover frequency (TOF, s$^{-1}$): reflects the efficiency of a catalytic site (frequency of reactions). The higher the TOF, the better the activity,
- mass activity (mA.g$^{-1}$) at a given overpotential,
- temperature of the electrolytic medium, here RT,
- concentration of the medium in KOH, here 1 M.

*Table 3. Electrochemical characteristics of best catalysts in literature, LDH stand for Layer Double Hydroxide, G for Gelled, CP for Carbon Paper and GC for Glassy Carbon.*

| Catalysts | Substrate | $\eta^*$ (mV) | Bulk TOF (s$^{-1}$)** | Tafel (mV.dec$^{-1}$) | Mass activity** (A.g$^{-1}$) | Reference |
|---|---|---|---|---|---|---|
| $Co_{0.5}Fe_{0.5}O_{0.5}F_{1.5}$ | CP | 220 | 0.5 | 27 | 846 | Present invention |
| LDH-(Co,Fe) | CP | 331 | 0.01 | 85 | 32 | Zhang et al Science (80). 2016, 352 (6283), 333-337. |
| G-(Co,Fe)OOH | GC | 271 | 0.043 | 60 | 162 | Zhang et al. 2016 |
| G-(Co,Fe,Mo)OOH | CP | 233 | 0.09 | - | - | Zhang et al. Nat. Catal. 2020, 3, 985-9924 |
| G-(Co,Fe,Mo,W) OO H | CP | 212 | 0.24 | - | - | Zhang et al. 2020 |
| G-(Co,Fe,W)OOH | GC | 217 | 0.46 | 37 | 1175 | Zhang et al. 2016 |
| LDH-(Ni,Fe) | GC | 269 | 0.07 | - | 117 | Zhang et al. 2016 |
| LDH/GO-(Ni,Fe) | GC | 210 | 0.1 | 42 | - | McCrory et al. J. Am. Chem. Soc. 2015, 137 (13), 4347-4357 |
| (Ni,Fe,Mo)OOH | CP | 201 | 0.1 | 32 | - | Zhang et al. 2020 |
| (Ni,Fe,Mo,W)OO H | CP | 205 | 0.14 | 28 | - | Zhang et al. 2020 |

(continued)

| Catalysts | Substrate | $\eta^*$ (mV) | Bulk TOF $(s^{-1})^{**}$ | Tafel $(mV.dec^{-1})$ | Mass activity** $(A.g^{-1})$ | Reference |
|---|---|---|---|---|---|---|
| $IrO_2$ | CP | 260 | 0.01 | 45 | - | McCrory et al. 2015 |
| evaluated at 10 mA.cm$^{-2}$ evaluated at 300 mV | | | | | | |

## Example 2: Synthesis of $M^{2+}M'^{3+}F_5(H_2O)_7$

The synthesis of oxyfluorinated solid solutions $M^{2+}{}_xM'^{3+}{}_{1-x}O_{1-x}F_{1+x}$ is carried out in two steps: the first one is the synthesis of a hydrated fluorinated precursor $M^{2+}M'^{3+}F_5(H_2O)_7$, frequently written MM'F$_5$·7H$_2$O, in concentrated hydrofluoric acid (HF) and the second one consists of a moderate thermal treatment in ambient atmosphere to obtain the solid solutions $M^{2+}{}_xM'^{3+}1_{-x}O_{1-x}F_{1+x}$.

The metal salts (chlorides, nitrates, carbonates, phosphates, sulfates, acetates...) are dissolved in a concentrated HF solution. Then the solution is evaporated at a temperature below the boiling point of the solution until the beginning of the precipitation. The solution is cooled at ambient air and the as-synthesized solid is filtered out, washed and dried leading to MM'F$_5$(H$_2$O)$_7$ with a yield around 70%. These synthesis methods can be extending to three (or more) metals by multi-substitution as well as on +II and/or +III metal cations such as $M^{2+}{}_{1-x}M''^{2+}{}_xM'^{3+}F_5(H_2O)_7$ or $M^{2+}M'^{3+}{}_{1-x}XM''^{3+}{}_xF_5(H_2O)_7$. As alternative synthesis, after dissolution of the metal salts, the precipitation is triggered by an addition of an alcohol such as ethanol at room temperature. The solid is recovered by the same aforementioned protocol.

## Example 2.1: $Co^{2+}Fe^{3+}F_5(H_2O)_7$

COCl$_2$·6H$_2$O (237.9 mg) and Fe(NO$_3$)$_3$.9H$_2$O (404.0 mg) are dissolved into 10 mL of a concentrated hydrofluoric acid solution (28 mol.L$^{-1}$, HF$_{48\%}$). The reaction mixture is placed in a Teflon Becher and stirred for 1 h at 100°C in an oil bath until the formation of a precipitate. After cooling, the mixture is filtered, washed with technical ethanol and dried at room temperature giving pink powder.

## Example 2.2: $Ni^{2+}Fe^{3+}F_5(H_2O)_7$

Ni(NO$_3$)$_2$·6H$_2$O (290.8 mg) and Fe(NO$_3$)$_3$.9H$_2$O (404.0 mg) are dissolved into 10 mL a concentrated hydrofluoric acid solution (28 mol.L$^{-1}$, HF$_{48\%}$). The reaction mixture is placed in a Teflon Becher and stirred for 1 h at 100°C in an oil bath until the formation of a precipitate. After cooling, the mixture is filtered, washed with technical ethanol and dried at room temperature giving green powder.

## Example 2.3: $Co^{2+}{}_{0.5}Ni^{2+}{}_{0.5}Fe^{3+}F_5(H_2O)_7$

COCl$_2$·6H$_2$O (119.0 mg), Ni(NO$_3$)$_2$·6H$_2$O (145.4 mg) and Fe(NO$_3$)$_3$.9H$_2$O (404.0 mg), are dissolved into 10 mL a concentrated hydrofluoric acid solution (28 mol.L$^{-1}$, HF$_{48\%}$). The reaction mixture is placed in a Teflon Becher and stirred for 1 h at 100 °C in an oil bath until the formation of a precipitate. After cooling, the mixture is filtered, washed with technical ethanol and dried at room temperature giving brownish powder.

## Example 3: Synthesis of solid solutions $M^{2+}{}_xM'^{3+}{}_{1-x}O_{1-x}F_{1+x}$

A thermal treatment at moderated temperature (+/- 250°C) in atmospheric conditions of hydrated fluorides MM'F$_5$(H$_2$O)$_7$ leads to the formation of solid solutions $M_{0.5}M'_{0.5}O_{0.5}F_{1.5}$ along the general reaction:

$$MM'F_5(H_2O)_7 \rightarrow 2M_{0.5}M'_{0.5}O_{0.5}F_{1.5} + 2HF + 6H_2O$$

## Example 3.1: $Co^{2+}{}_{0.5}Fe^{3+}{}_{0.5}O_{0.5}F_{1.5}$

$Co^{2+}{}_{0.5}Fe^{3+}{}_{0.5}O_{0.5}F_{1.5}$ is obtained by thermal treatment of $Co^{2+}Fe^{3+}F_5(H_2O)_7$ under ambient atmosphere at 240°C for 1 h in a furnace corresponding to an experimental weight loss of 43.4% close to the theoretical value 43.9%

($m_{before}$ = 175 mg, $m_{after}$ = 99 mg).

### Example 3.2: $Ni^{2+}_{0.5}Fe^{3+}_{0.5}O_{0.5}F_{1.5}$

$Ni^{2+}_{0.5}Fe^{3+}_{0.5}O_{0.5}F_{1.5}$ is obtained by thermal treatment of $Ni^{2+}Fe^{3+}F_5(H_2O)_7$ under ambient atmosphere at 290°C for 1h30 min in a furnace corresponding to an experimental weight loss of 44.7% close to the theoretical value 44% ($m_{before}$ = 434 mg, $m_{after}$ = 240 mg).

### Example 3.3: $Co^{2+}_{0.25}Ni^{2+}_{0.25}Fe^{3+}_{0.5}O_{0.5}F_{1.5}$

$Co^{2+}_{0.25}Ni^{2+}_{0.25}Fe^{3+}_{0.5}O_{0.5}F_{1.5}$ is obtained by thermal treatment of $Co^{2+}_{0.5}Ni^{2+}_{0.5}Fe^{3+}F_5(H_2O)_7$ under ambient atmosphere at 280°C for 30 min in a furnace corresponding to an experimental weight loss of 46% close to the theoretical value 44.0% ($m_{before}$ = 371 mg, $m_{after}$ = 200 mg).

### Example 4: Characterization of $M^{2+}M'^{3+}F_5(H_2O)_7$ and $M^{2+}_xM'^{3+}_{1-x}O_{1-x}F_{1+x}$

XRD = X-ray diffraction
SEM-EDX = Scanning Electron Microscope coupled with Energy Dispersive X-ray
TXRD = Thermal X-ray Diffraction
TGA = ThermoGravimetry Analysis
FTIR = Fourier Transformed Infrared Spectroscopy
TEM = Transmission Electron Microscopy

### Example 4.1: Characterization of $M^{2+}M'^{3+}F_5(H_2O)_7$

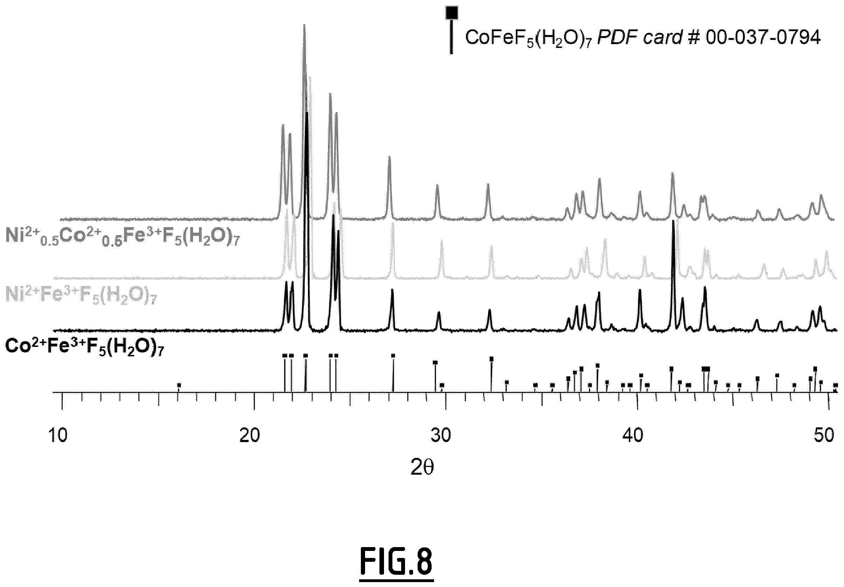

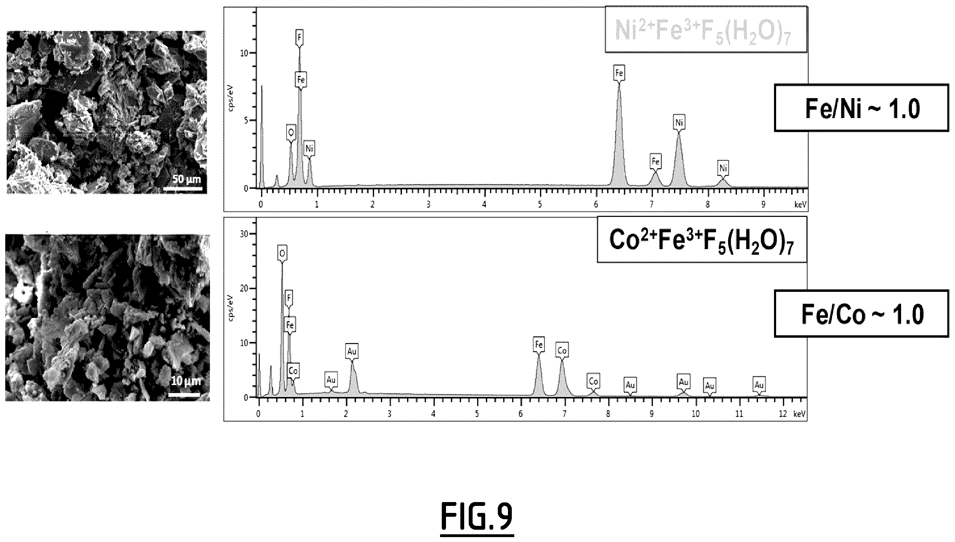

Experimental XRD patterns match with the known XRD pattern of the $CoFeF_5(H_2O)_7$ (PDF card number 00-037-0794) (Figure 8). Small shifts of diffraction peaks related to different metal ionic radii are observed. The metal ratio $M'^{3+}/M^{2+}$ close to one, obtained by SEM-EDX, is in good agreement with $M^{2+}M'^{3+}F_5(H_2O)_7$ formulations (Figure 9).

### *Thermal analyses of $Co^{2+}Fe^{3+}F_5(H_2O)_7$*

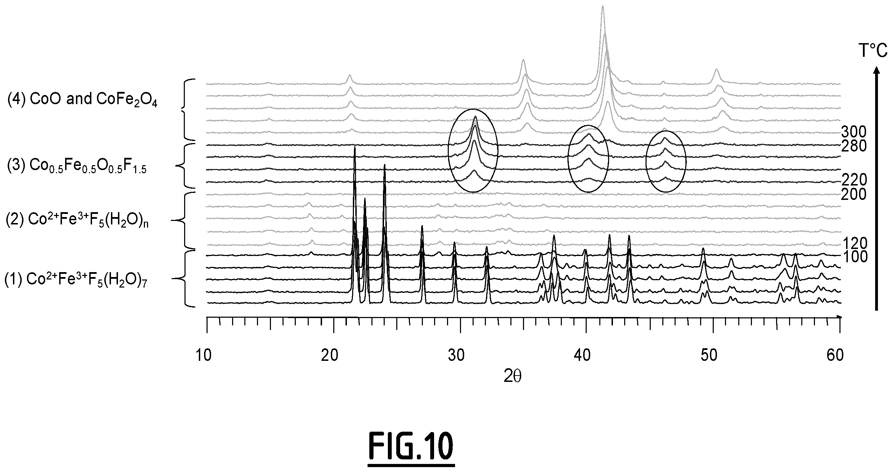

**TXRD:** The monitoring of the structural evolution of $Co_{0.5}Fe_{0.5}O_{0.5}F_{1.5}$ as function of the temperature exhibits four domains (Figure 10):

(1) RT-100°C: stability of $CoFeF_5(H_2O)_7$,
(2) 100-200°C: dehydration of $CoFeF_5(H_2O)_7$ leading to the formation of $CoFeF_5(H_2O)_n$ (n < 7),
(3) 220-280°C: formation of $Co_{0.5}Fe_{0.5}O_{0.5}F_{1.5}$ with rutile structure type,
(4) from 300°C: formation of oxides CoO and $CoFe_2O_4$.

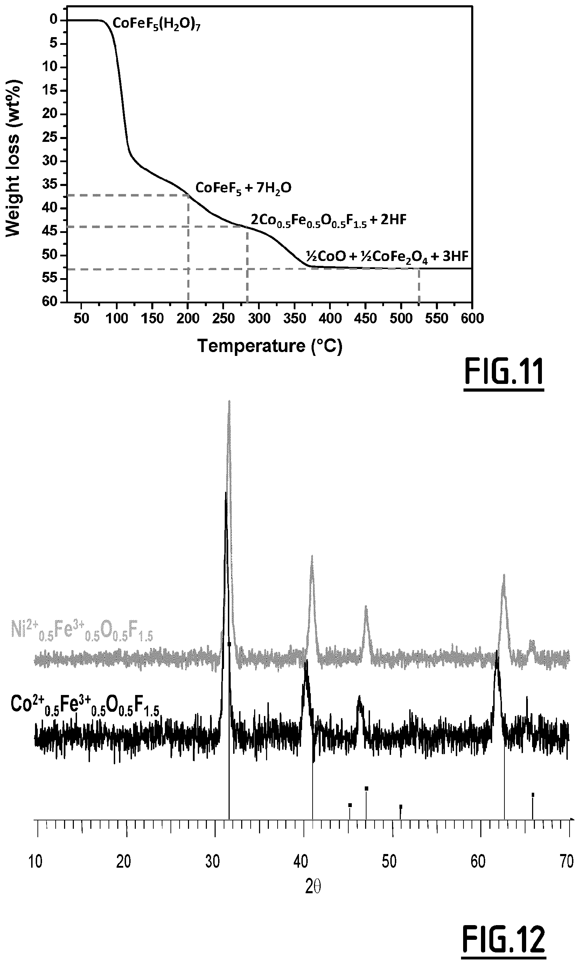

**TGA:** The formulation of the intermediate phase $Co_{0.5}Fe_{0.5}O_{0.5}F_{1.5}$ observed by TDRX is confirmed by TGA under ambient air (Figure 11). $CoFeF_5(H_2O)_7$ undergoes the following decompositions upon thermal treatment, the experimental weight loss values are in good agreement with theoretical values:

100°C < T < 200°C: $CoFeF_5(H_2O)_7 \rightarrow CoFeF_5 + 7H_2O$
($\%_{theo}$ = 37.6% / $\%_{exp}$ = 37.3%)
200°C < T < 280°C: $CoFeF_5 + H_2O \rightarrow 2Co_{0.5}Fe_{0.5}O_{0.5}F_{1.5} + 2HF$
($\%_{theo}$ = 43.4% / $\%_{exp}$ = 43.9%)
T > 280°C: $2Co_{0.5}Fe_{0.5}O_{0.5}F_{1.5} + 3/2\ H_2O \rightarrow \%CoO + \frac{1}{2}CoFe_2O_4 + 3HF$
($\%_{theo}$ = 53.6% / $\%_{exp}$ = 52.8%)

### Example 4.2: Characterization of solid solutions $M^{2+}_xM'^{3+}_{1-x}O_{1-x}F_{1+x}$

**XRD:** XRD patterns of $Co_{0.5}Fe_{0.5}O_{0.5}F_{1.5}$ and $Ni_{0.5}Fe_{0.5}O_{0.5}F_{1.5}$ match with the PDF card (01-070-1522) of FeOF (rutile structure type) and show line profiles which are characteristic of low crystalline compounds (Figure 12).

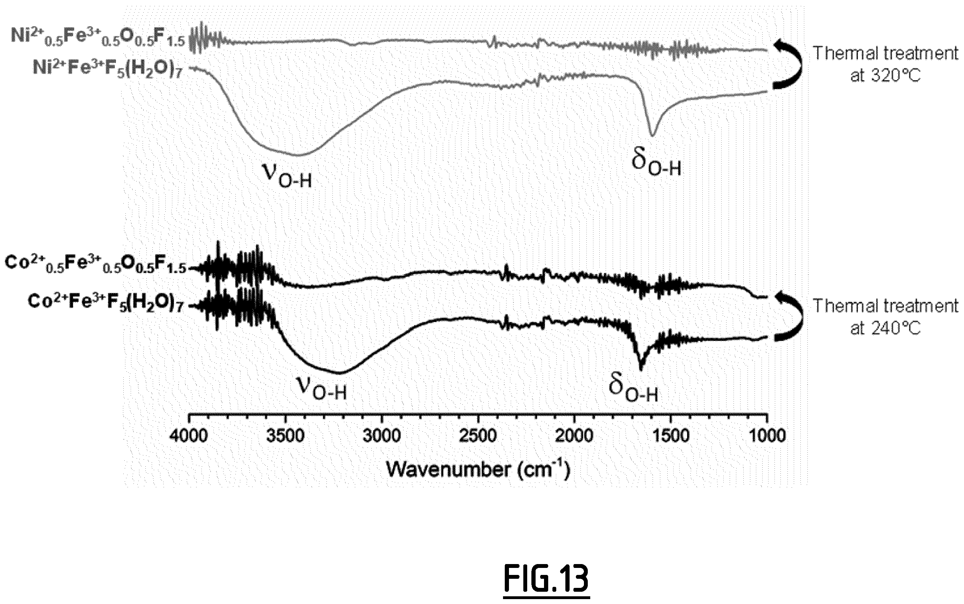

**FTIR:** Water removal of hydrated fluorides $CoFeF_5(H_2O)_7$ and $CoFeF_5(H_2O)_7$ after thermal treatment is confirmed by FTIR (Figure 13). The FTIR spectra of $CoFeF_5(H_2O)_7$ and $CoFeF_5(H_2O)_7$ present a broad signal between 3300 and 2800 cm$^{-1}$ and a sharp peak centered at 1600 cm$^{-1}$ attributed to the stretching ($v_{O-H}$) and bending ($\delta_{H-O-H}$) modes respectively. After thermal treatment, these signals are no longer present, confirming $H_2O$ removal.

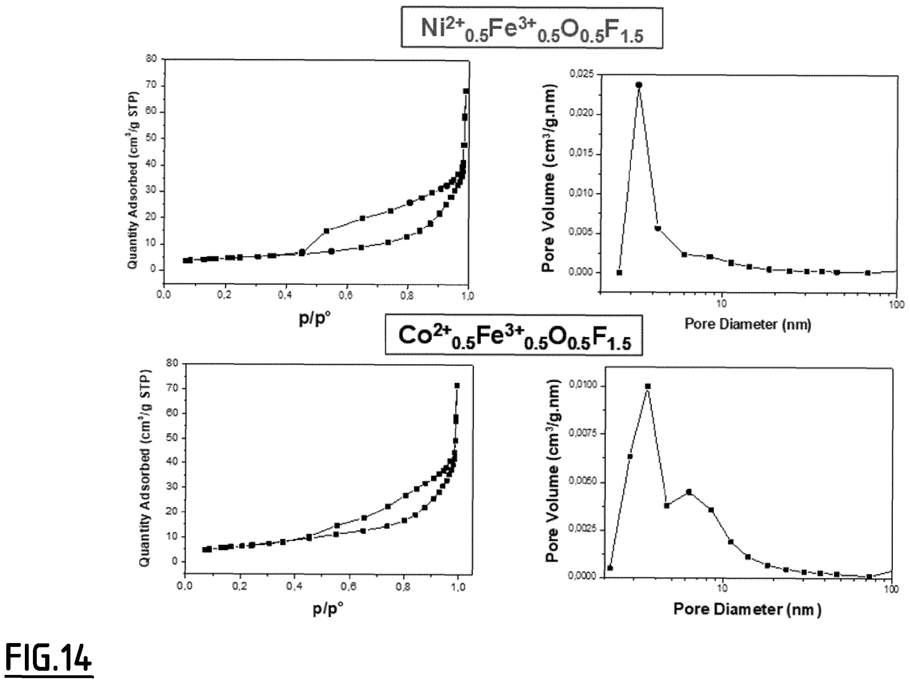

The thermal treatment induces a significant increase of the specific surface area ($S_{BET}$) between the hydrated fluorides and the oxyfluorides: $CoFeF_5(H_2O)_7$ (3 $m^2.g^{-1}$), $NiFeF_5(H_2O)_7$ (1 $m^2.g^{-1}$), $Co_{0.5}Fe_{0.5}O_{0.5}F_{1.5}$ (24 $m^2.g^{-1}$), and $Ni_{0.5}Fe_{0.5}O_{0.5}F_{1.5}$ (17 $m^2.g^{-1}$) (Figure 14).

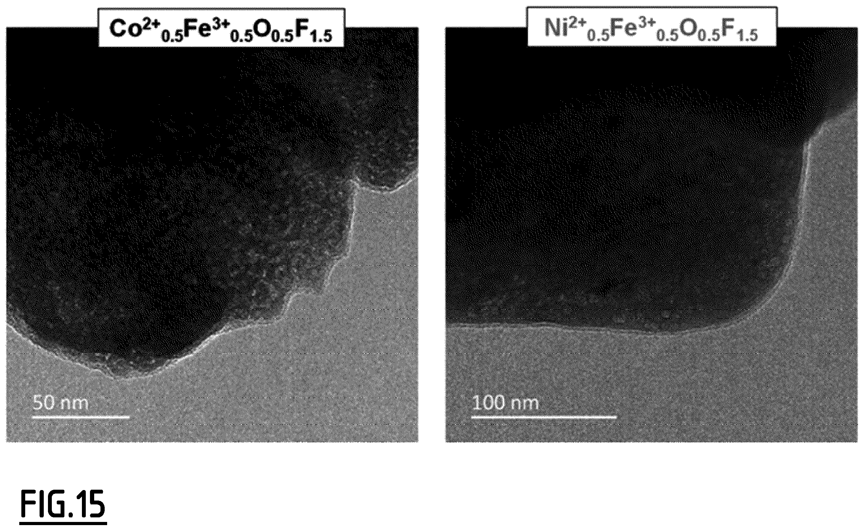

TEM images show that the increase of $S_{BET}$ is probably related to an emerging porosity related to the removal of HF and $H_2O$ gas molecules during the thermal decomposition (Figure 15). This nanostructuration, in agreement with XRD patterns, is also confirmed by $N_2$ adsorption/desorption isotherms showing type IV hysteresis corresponding to mesoporous structure according to the IUPAC classification; the mesopores diameters range from 2 up to 10 nm (Figure 14).

**Claims**

1. A compound of formula (I):

$$(M1^{2+}{}_xM2^{3+}{}_{1-x})_{1-u-v}(M1'^{2+}{}_yM2'^{3+}{}_{1-y})_u(M1''^{2+}{}_zM2''^{3+}{}_{1-z})_vO_{1-w}F_{1+w} \qquad (I)$$

Wherein
M1, M2, M1', M2', M1", M2" are transition metals of the *d/f* block or alkaline-earth elements in the periodic table;
u, v, x, y and z are identical or different and are such that
u+v < 1;
0 < x,y,z < 1;
w = x+u(y-x)+v(z-x).

2. The compound according to claim 1 where M1, M1' and M1" belong to *d/f* block or alkaline-earth elements in the periodic table and M2, M2' and M2" belong to *d/f* transition elements of the periodic table.

3. The compound according to claim 1 or 2 wherein:

   either x = 0.5 and y = z = u = v = 0 or
   x = y = 0.5 and u = 0.5 and z = v = 0 with M2 = M2' or
   x = 0.3 and y = 0.7 and u=0.5 and z = v = 0 with M2 = M2'.

4. The compound according to anyone of the preceding claims wherein M1 and M1', M1" are chosen from Mn, Fe, Co, Ni, Cu, Zn and M2 and M2', M2" are chosen from Mn, Fe, Co, Ni, Ru, Rh.

5. The compound according to anyone of the preceding claims wherein the compound (I) is chosen from $Co^{2+}{}_{0.5}Fe^{3+}{}_{0.5}O_{0.5}F_{1.5}$, $Ni^{2+}{}_{0.5}Fe^{3+}{}_{0.5}O_{0.5}F_{1.5}$, $Zn^{2+}{}_{0.5}Fe^{3+}{}_{0.5}O_{0.5}F_{1.5}$, $Co^{2+}{}_{0.25}Ni^{2+}{}_{0.25}Fe^{3+}{}_{0.5}O_{0.5}F_{1.5}$, $Co^{2+}{}_{0.15}Fe^{2+}{}_{0.35}Fe^{3+}{}_{0.5}O_{0.5}F_{1.5}$.

6. A solid solution of the compound according to anyone of claims 1 to 5.

7. An electrode comprising the compound of formula (I) according to anyone of claims 1 to 5 as a catalyst.

8. The electrode according to claim 7, comprising carbon paper loaded with an ink comprising the compound of formula (I).

9. An electrochemical cell comprising the electrode according to anyone of claims 7 and 8.

10. The electrochemical cell according to claim 9 which is a water electrolyzer and/or a fuel cell.

11. The process of preparation of the solid solution according to 6, which comprises the following steps:

    - The synthesis of a hydrated fluorinated precursor of formula (II):

$$(M1^{2+}{}_xM2^{3+}{}_{1-x})_{1-u-v}(M1'^{2+}{}_yM2'^{3+}{}_{1-y})_u(M1''^{2+}{}_zM2''^{3+}{}_{1-z})_vF_5(H_2O)_7 \qquad (II)$$

    Where x, y, z, u, v, M1, M2, M1', M2', M1", M2" are defined as in anyone of claims 1 to 5,
    By evaporation of a concentrated hydrofluoric acid (HF) solution of the dissolved metal salts or by precipitation of said solution; and

- The thermal treatment of the compound of formula (II) at a temperature comprised between 150 and 400°C.

12. The compound of formula (II):

$$(M1^{2+}{}_x M2^{3+}{}_{1-x})_{1-u-v}(M1'^{2+}{}_y M2'^{3+}1_{-y})_u(M1''^{2+}{}_z M2''^{3+}{}_{1-z})_v F_5(H_2O)_7 \qquad (II)$$

Where x, y, z, u, v, M1, M2, M1', M2', M1", M2" are defined as in anyone of claims 1 to 5.

13. A process of preparation of hydrogen comprising the electrolysis of water with an electrochemical cell according to anyone of claims 9 or 10.

A

B

EP 4 086 371 A1

## FIG.1

FIG.2

**FIG.3**

**FIG.4**

**FIG.5**

$E_a$=28.9 kJ/Mol

**FIG.6**

FIG.7

**FIG.8**

Ni$^{2+}$Fe$^{3+}$F$_5$(H$_2$O)$_7$

Fe/Ni ~ 1.0

Co$^{2+}$Fe$^{3+}$F$_5$(H$_2$O)$_7$

Fe/Co ~ 1.0

FIG.9

(4) CoO and CoFe$_2$O$_4$

(3) Co$_{0.5}$Fe$_{0.5}$O$_{0.5}$F$_{1.5}$

(2) Co$^{2+}$Fe$^{3+}$F$_5$(H$_2$O)$_n$

(1) Co$^{2+}$Fe$^{3+}$F$_5$(H$_2$O)$_7$

T°C

300
280
220
200
120
100

2θ

**FIG.10**

EP 4 086 371 A1

FIG.11

FIG.12

Ni$^{2+}_{0.5}$Fe$^{3+}_{0.5}$O$_{0.5}$F$_{1.5}$

Ni$^{2+}$Fe$^{3+}$F$_5$(H$_2$O)$_7$

Thermal treatment at 320°C

$\nu_{O-H}$

$\delta_{O-H}$

Co$^{2+}_{0.5}$Fe$^{3+}_{0.5}$O$_{0.5}$F$_{1.5}$

Co$^{2+}$Fe$^{3+}$F$_5$(H$_2$O)$_7$

Thermal treatment at 240°C

$\nu_{O-H}$

$\delta_{O-H}$

4000    3500    3000    2500    2000    1500    1000

Wavenumber (cm$^{-1}$)

<u>FIG.13</u>

EP 4 086 371 A1

FIG.14

Co²⁺₀.₅Fe³⁺₀.₅O₀.₅F₁.₅

Ni²⁺₀.₅Fe³⁺₀.₅O₀.₅F₁.₅

50 nm

100 nm

**FIG.15**

EP 4 086 371 A1

Europäisches
Patentamt

European
Patent Office

Office européen
des brevets

# EUROPEAN SEARCH REPORT

Application Number

EP 21 30 5587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Lemoine Kévin ET AL: "Investigating of mixed-metal (oxy)fluorides as a new clas of water oxidation electrocatalysts", Chem. Science, 2019, 10, 9 September 2019 (2019-09-09), pages 9209-9218, XP055854900, DOI: 10.1039/c9sc04027grsc.li/chemical-science Retrieved from the Internet: URL:https://pubs.rsc.org/en/content/articl epdf/2019/sc/c9sc04027g [retrieved on 2021-10-26] * the whole document * | 1-13 | INV. C25B1/04 C25B11/052 C25B11/065 C25B11/077 C04B35/553 C04B35/626 H01M4/86 H01M4/90 H01M8/083 H01M8/086 B01J27/12 B01J35/00 H01M8/1018 |
| A | LEMOINE KÉVIN ET AL: "Amorphous Iron-Manganese Oxyfluorides, Promising Catalysts for Oxygen Evolution Reaction under Acidic Media", ACS APPLIED ENERGY MATERIALS, [Online] vol. 4, no. 2, 22 February 2021 (2021-02-22), pages 1173-1181, XP055854918, ISSN: 2574-0962, DOI: 10.1021/acsaem.0c02417 Retrieved from the Internet: URL:https://pubs.acs.org/doi/pdf/10.1021/a csaem.0c02417> [retrieved on 2021-10-26] * the whole document * | 1-13 | |
| A | US 2017/233879 A1 (KUMTA PRASHANT N [US] ET AL) 17 August 2017 (2017-08-17) * the whole document * | 1-13 | TECHNICAL FIELDS SEARCHED (IPC) C25B C04B H01M B01J |
| A | WO 2017/100743 A1 (UNIV OF PITTSBURGH-OF THE COMMONWEALTH SYSTEM OF HIGHER EDUCATION [US]) 15 June 2017 (2017-06-15) * the whole document * | 1-13 | |

-/--

The present search report has been drawn up for all claims

| Place of search | Date of completion of the search | Examiner |
|---|---|---|
| Munich | 27 October 2021 | Handrea-Haller, M |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 30 5587

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2011/127170 A1 (GERKEN JAMES B [US] ET AL) 2 June 2011 (2011-06-02) * the whole document * | 1-13 | |

TECHNICAL FIELDS
SEARCHED      (IPC)

The present search report has been drawn up for all claims

| Place of search | Date of completion of the search | Examiner |
|---|---|---|
| Munich | 27 October 2021 | Handrea-Haller, M |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

page 2 of 2

## ANNEX TO THE EUROPEAN SEARCH REPORT
## ON EUROPEAN PATENT APPLICATION NO.

EP 21 30 5587

This annex lists the patent family members relating to the patent documents cited in  the above-mentioned European search report.
The members are as contained in the European Patent Office EDP file on
The European Patent Office is in no way liable for these particulars which are merely given for the purpose of information.

27-10-2021

| Patent document cited in search report | | Publication date | Patent family member(s) | | Publication date |
|---|---|---|---|---|---|
| US 2017233879 | A1 | 17-08-2017 | US | 2017233879 A1 | 17-08-2017 |
| | | | US | 2018320278 A1 | 08-11-2018 |
| | | | US | 2020131651 A1 | 30-04-2020 |
| WO 2017100743 | A1 | 15-06-2017 | US | 2018331369 A1 | 15-11-2018 |
| | | | US | 2021184226 A1 | 17-06-2021 |
| | | | WO | 2017100743 A1 | 15-06-2017 |
| US 2011127170 | A1 | 02-06-2011 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **XU et al.** *Chem. Soc. Rev,* 2017, vol. 46, 337, https://doi.org/10.1039/c6cs00328a
- **ZHANG et al.** *Science (80).,* 2016, vol. 352 (6283), 333-337
- **ZHANG et al.** *Nat. Catal.,* 2020, vol. 3, 985-9924
- **MCCRORY et al.** *J. Am. Chem. Soc.,* 2015, vol. 137 (13), 4347-4357